# DEMANDE DE BREVET EUROPEEN

(11) **EP 0 579 589 A1**
(43) Date de publication de la demande: **19.01.1994**
(21) Numéro de dépôt: 93870147.1
(22) Date de dépôt: 15.07.1993
(51) Int. Cl.: B66C 23/36

(54) **Semi-remorque ou remorque portant une grue déplaçable**

(30) Priorité: 15.07.1992 BE 9200663
(71) Demandeur: ATELIERS LEONET SPRL, B-5555 Graide-Station/Bièvre (BE)
(72) Inventeur: Léonet, José, B-6929 Haut-Fays (Daverdisse) (BE)
(74) Mandataire: Vanderperre, Robert

(57) **Abrégé**

Le châssis de la remorque ou semi-remorque (1) comprend des glissières (13) attachées à des longerons du châssis et s'étendant sur une partie au moins de la longueur des longerons (3), une console de support (4) portant une grue auxiliaire de chargement (2) et montée pour coulisser le long des glissières (13) précitées, et un moyen d'entraînement (5) pour déplacer la console de support (4) le long des glissières (13) de manière à partager la surface de chargement en une première zone de chargement (A) située en avant de la console de support (4) et une seconde zone de chargement (B) située derrière la console de support (4).

## Description

La présente invention concerne les remorques et semi-remorques équipées de grues hydrauliques auxiliaires pour le chargement et le déchargement de charges, en particulier des charges forestières.

Le domaine technique auquel se rapporte l'invention est celui de la manutention et du transport de charges modulaires telles que grumes ou bois découpés de diverses longueurs, conteneurs, palettes, caisses, etc. Le transport de telles charges s'effectue généralement sur une semi-remorque et la manipulation des charges se fait soit à l'aide d'une grue embarquée, soit à l'aide d'un moyen de chargement externe.

Lorsqu'une grue auxiliaire est fixée sur une remorque ou une semi-remorque, elle est habituellement montée à une extrémité de la remorque ou semi-remorque. Dans l'exemple d'une semi-remorque grumière classique, d'une longueur de 13,50 m, il est évidemment très facile de charger la semi-remorque avec des grumes d'une longueur de 6 m ou 2 fois des grumes de 3 m ou encore 3 fois des grumes de 2 m, mais si les grumes à charger ont par exemple des longueurs de 4 m ou des longueurs variées, il en résulte une énorme perte de place sur la semi-remorque.

Il existe déjà des véhicules équipés d'une grue mobile, et entre autres un système appelé rolloader. Il s'agit dans ce dernier système d'une grue placée sur un chariot équipé de roues en acier ou munies de pneus qui se déplacent sur les longerons du châssis ou sur les bords des rives spécialement aménagés à cet effet. Le déplacement du chariot est généralement assuré par un moteur actionnant une pompe hydraulique, laquelle entraîne un ou plusieurs moteurs hydrauliques transmettant le mouvement aux roues. Le chariot se déplace généralement sur toute la longueur du châssis et est parfois stocké pendant le transport sur un support porté en porte-à-faux à l'arrière du véhicule.

Par NL-A-7 702 392 on connaît également une grue déplaçable montée sur le châssis d'un camion à benne basculante. La grue est montée sur un chariot roulant sur le châssis portant la benne de manière à servir à faire basculer la benne, le déplacement du chariot en tête de la benne permettant de faire varier l'angle d'inclinaison de la benne. Cette disposition du chariot porte-grue ne convient guère pour être utilisée sur une semi-remorque car elle ne permet pas de répartir des charges en avant de la grue et derrière la grue de manière à assurer un équilibrage des charges placées sur la semi-remorque. Or, l'équilibrage des charges sur une semi-remorque est indispensable pour assurer la sécurité du charroi en évitant le basculement de la semi-remorque, qui risquerait de soulever dangereusement le tracteur. Ce problème d'équilibrage est particulièrement sensible avec une semi-remorque grumière destinée au chargement et au transport de lourdes grumes.

L'invention a pour but d'optimiser la surface de chargement d'un semi-remorque ou d'une remorque en permettant une répartition modulée de charges de grandes longueurs tout en assurant un équilibrage parfait dans le cas d'une semi-remorque.

Ce but est atteint grâce à l'invention par une semi-remorque ou une remorque agencée comme défini dans les revendications.

En particulier, le châssis de la remorque ou semi-remorque comprend des glissières attachées à des longerons du châssis et s'étendant sur une semi-remorque ou remorque ayant un châssis comportant des longerons, ladite remorque ou semi-remorque comprenant des glissières attachées à deux longerons précités et s'étendant sur une partie au moins de la longueur des longerons, une console de support montée pour coulisser le long des glissières précitées et portant une grue auxiliaire de chargement, ainsi qu'un moyen d'entraînement pour déplacer la console de support le long des glissières de manière à partager la surface de chargement en une première zone de chargement située en avant de la console de support et une seconde zone de chargement située derrière la console de support.

L'invention est exposée plus en détails dans ce qui suit à l'aide des dessins ci-annexés.

La figure 1 est une vue latérale d'une semi-remorque grumière équipée d'une grue forestière conformément à l'invention.

La figure 2 est une vue similaire à celle de la figure 1 montrant la grue forestière positionnée pour une autre répartition de la charge à transporter.

La figure 3 est une vue en plan partielle de la semi-remorque de la figure 2 montrant un mode d'exécution de console porte-grue conforme à l'invention.

La figure 4 est une vue en plan, à plus grande échelle, de la console porte-grue représentée sur la figure 3.

La figure 5 montre une vue en coupe transversale suivant la ligne V-V de la figure 4.

La figure 6 montre une vue en coupe longitudinale suivant la ligne VI-VI de la figure 4.

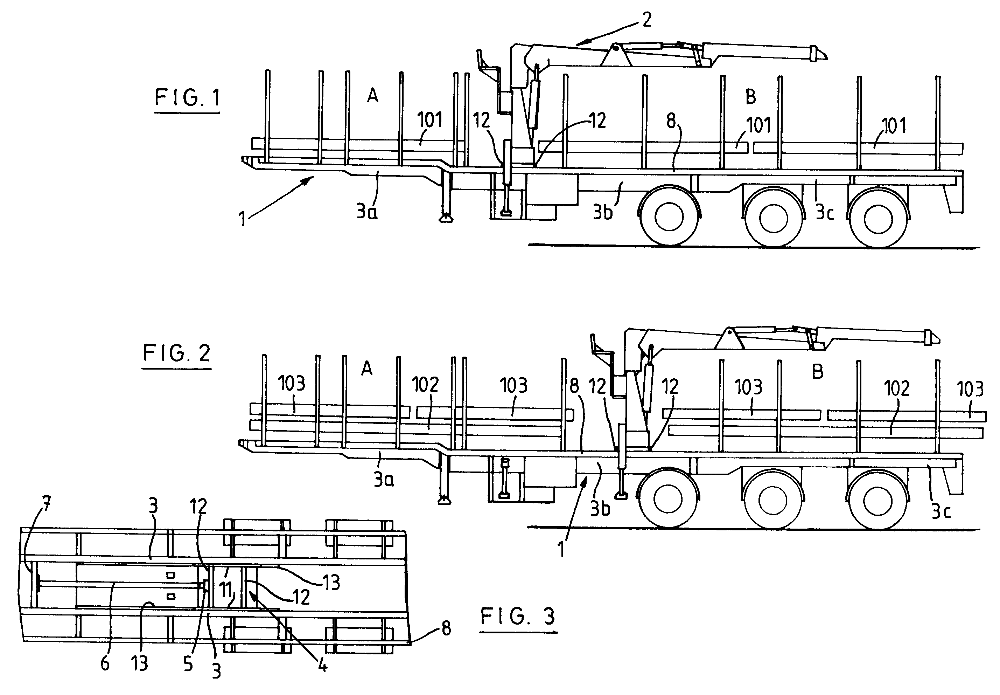

Se reportant à la figure 1, on voit, à titre d'exemple, une semi-remorque grumière 1 équipée, conformément à l'invention, d'une grue forestière 2 destinée à la manutention et au chargement de lourdes grumes. La grue 2 est montée sur une console de support (visible sur la figure 3) disposée sur une partie 3b du châssis 3 de la semi-remorque comprise entre une partie avant 3a formant une première zone de chargement A et une partie arrière 3c formant une deuxième zone de chargement B au-dessus des essieus porteurs. La console de support 4 est montée de manière à pouvoir être déplacée parallèlement à l'axe longitudinal de la semi-remorque entre une position avancée et une position reculée. La figure 1 montre la grue dans sa position avancée : la zone de chargement avant a ainsi une surface de chargement plus petite que celle de la zone de chargement arrière. La figure 2 montre la grue dans sa position reculée : la zone de chargement avant a dans ce cas une surface de chargement plus étendue que dans le cas représenté à la figure 1 tandis que la zone de chargement arrière a une surface de chargement moins étendue.

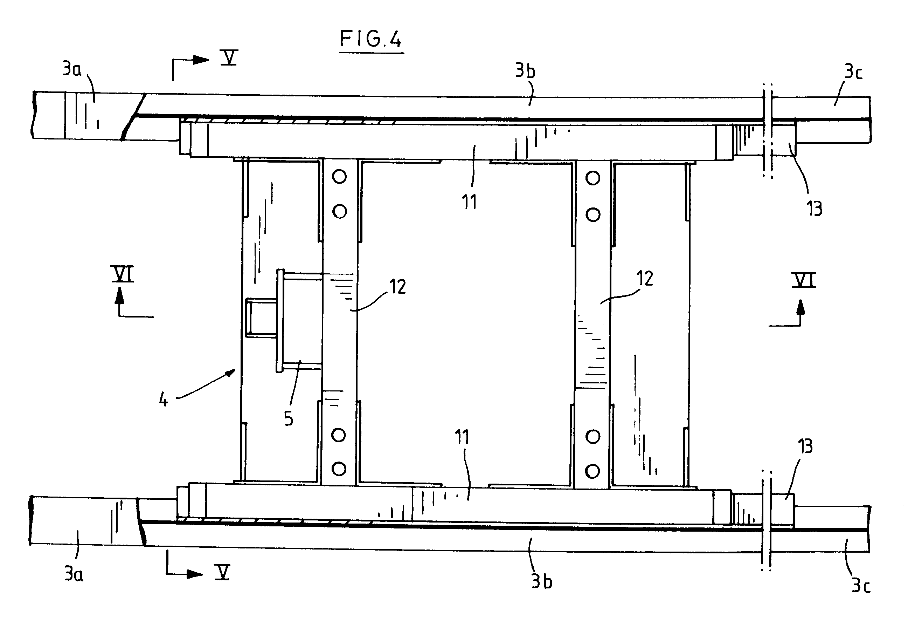

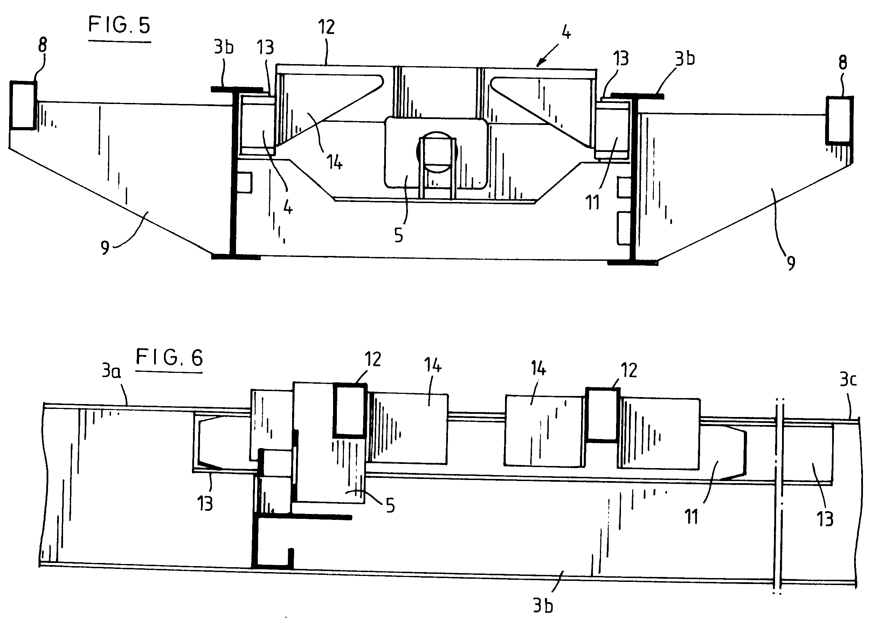

Comme le montrent en particulier les figures 3 à 6, la console porte-grue 4 est montée pour coulisser entre deux longerons 3 du châssis de la semi-remorque 1, qui s'étendent parallèlement aux deux rives 8 du châssis auxquelles elles sont attachées par des entretoises 9. Le déplacement de la console de support entre les longerons 3 est assuré par un vérin hydraulique 5 fixé sous la console porte-grue et actionné par la pompe de la grue sous la commande d'un distributeur. Le bloc vérin 5 coulisse le long de la tige 6 fixée au châssis par une entretoise 7. La commande du déplacement de la console peut aussi être effectuée au moyen de plusieurs vérins hydrauliques.

La console de support est constituée d'un cadre formé de deux poutrelles 11 réunies par des traverses 12. Les poutrelles 11 sont montées pour coulisser le long de deux glissières 13 fixées le long des longerons 3. Les traverses 12 sont attachées aux poutrelles 11 par des cornières 14. Les glissières 13 s'étendent sur une certaine longueur dans la partie médiane de la semi-remorque de manière que la grue puisse se trouver positionnée entre les zones de chargement avant A et arrière C de la semi-remorque. La console peut être équipée de rouleaux et/ou galets.

Le positionnement de la console de support entre ses positions extrêmes se fait normalement avant les opérations de chargement, en fonction des dimensions des charges à embarquer.

Par rapport à une semi-remorque équipée d'une grue de manière classique, l'invention permet une utilisation nettement meilleure de l'espace utile et donc une beaucoup plus grande rentabilité du transport par une très nette augmentation des possibilités de chargement tout en permettant de réaliser un équilibrage optimal des charges embarquées.

Revenant à la figure 1, la grue 2 positionnée en position avancée permet par exemple de charger dans la zone de chargement A des grumes 101 de 4 m par exemple et dans la zone de chargement B, deux lots de grumes 101 de 4 m par exemple. Positionnée en position reculée représentée à la figure 2, la grue 2 permet de charger dans la zone de chargement A des grumes 102 de 6 m et/ou deux fois des grumes 103 de 3 m et dans la zone de chargement B, des grumes 102 de 6 m et/ou deux fois des grumes 103 de 3 m. En positionnant la console porte-grue dans une position quelconque entre les positions représentées aux figures 1 et 2, l'invention permet de moduler les surfaces des zones de chargement A et B en fonction des longueurs des grumes à transporter, et cela en pouvant toujours équilibrer les charges dans les zones de chargement A et B.

De plus, le système suivant l'invention est simple, peu coûteux, fiable et facile à entretenir. Il n'y a en effet ni moteur à combustion interne, ni moteur hydraulique, ni roues, ni transmissions, d'où également un gain de poids considérable.

## Revendications

1. Semi-remorque ou remorque (1) ayant un châssis comportant des longerons (3), caractérisé en ce qu'elle comprend des glissières (13) attachées à deux des longerons précités et s'étendant sur une partie au moins de la longueur des longerons (3), une console de support (4) montée pour coulisser le long des glissières (13) précitées, un moyen d'entraînement (5) pour déplacer la console de support (4) le long des glissières (13) de manière à partager la surface de chargement en une première zone de chargement (A) située en avant de la console de support (4) et une seconde zone de chargement (B) située derrière la console de support (4), et une grue auxiliaire de chargement (2) montée sur la console de support (4) précitée.

2. Semi-remorque ou remorque suivant la revendication 1, caractérisée en ce que le moyen d'entraînement pour la console de support de grue (4) précitée consiste en au moins une vérin hydraulique (5) actionné par la pompe de la grue par l'intermédiaire d'un distributeur.

3. Semi-remorque ou remorque suivant la revendication 2, caractérisée en ce que le bloc vérin (5) est attaché sous la console de support (4) et coulisse le long d'une tige (6) solidaire du châssis.
